# EUROPÄISCHE PATENTSCHRIFT

(11) **EP 1 054 261 B1**
(45) Veröffentlichungstag und Bekanntmachung des Hinweises auf die Patenterteilung: **20.10.2004**
(21) Anmeldenummer: 00108324.5
(22) Anmeldetag: 15.04.2000
(51) Int. Cl.: G01R 31/04, H02J 7/00

(54) **Zusatzgerät für ein Elektrokleingerät und Verfahren zur Erkennung einer elektrischen und/oder magnetischen Verbindung zwischen den Geräten**
Accessory for a small electrical apparatus and procedure for detecting an electric and/or magnetic connection between the two apparatus
Accesoire pour un petit appareil électrique et procédé de détection d'une connexion électrique et/ou magnetique entre des appareils

(30) Priorität: 18.05.1999 DE 19921677
(43) Veröffentlichungstag der Anmeldung: 22.11.2000
(60) Teilanmeldung: 03027233.0
(73) Patentinhaber: Braun GmbH, 61476 Kronberg (DE)
(72) Erfinder: Wohlrabe, Frank, 61476 Kronberg (DE)

(56) Entgegenhaltungen:
- DE-A- 19 727 639
- DE-A- 19 817 273
- US-A- 5 536 979
- US-A- 5 656 917
- US-A- 5 861 729
- USER MANUAL, BRAUN DENTAL CENTER OC 30, TYPE 4803, November 1990 (1990-11), Seite 3-5 XP002168536

## Beschreibung

Die Erfindung betrifft ein Zusatzgerät, beispielsweise ein Lade und Reinigungsgerät oder ein Lade- und Diagnosegerät, für ein Elektrokleingerät, das beispielsweise ein elektrisches Haarschneide- oder -entfernungsgerät oder eine elektrische Zahnbürste sein kann, insbesondere jedoch für einen elektrischen Rasierapparat, sowie ein Verfahren zur Erkennung einer elektrischen und/oder magnetischen Verbindung zwischen den Geräten.

Aus der US 5,861,729 (Maeda et al.) ist ein Ladegerät für tragbare, aufladbare Elektrogeräte bekannt, die verschiedenen Typen von aufladbaren Batterien enthalten können. Das Ladegerät kann einen Nickel-Cadmium-Akku von einem Nickel-Metallhydrid-Akku unterscheiden, und außerdem erkennen, ob es mit dem tragbaren Elektrogerät verbunden ist oder nicht.

Aus der US 5,536,979 (McEachem et al.) ist ein Ladegerät für ein tragbares, aufladbares Elektrogerät bekannt. Zum Aufladen können die beiden Geräte magnetisch gekoppelt werden. Das Ladegerät wird abgeschaltet, wenn der Akkumulator im Elektrogerät geladen ist, oder die beiden Geräte nicht mehr miteinander gekoppelt sind.

In der DE 198 17 273 sind ein Verfahren zur Datenübertragung zwischen einem Elektrokleingerät, beispielsweise einem elektrischen Haarschneidegerät, einer elektrischen Zahnbürste oder einem Haushaltsgerät, und einem mit diesem verbindbaren elektrischen Zusatzgerät, beispielsweise einem Lade-, Reinigungs- oder Diagnosegerät, sowie entsprechend ausgestaltete Geräte beschrieben. Die Datenübertragung erfolgt auf elektrischem und/oder magnetischem Wege, beispielsweise bei einem Elektrokleingerät mit Netzanschlußbuchse über die Netzanschlußbuchse, bei einem primärbatteriebetriebenen Elektrokleingerät über die Batteriekontakte. Unter Datenübertragung ist auch die Übertragung von Steuerbefehlen zu verstehen, mit denen beispielsweise vom Zusatzgerät aus bestimmte Funktionen des Elektrokleingeräts aktiviert werden können. Handelt es sich beispielsweise beim Elektrokleingerät um einen elektrischen Rasierapparat und beim Zusatzgerät um ein Rasierer-Reinigungsgerät, wie es in der DE 44 02 236 A1 beschrieben ist, so kann das Reinigungsgerät beispielsweise zum richtigen Zeitpunkt im Reinigungszyklus den Rasierer ein- und ausschalten und erforderlichenfalls auch einen im Rasierer enthaltenen Akkumulator aufladen.

Aus der DE 196 06 719 C2 ist ein elektrischer Rasierapparat mit einem Controller bekannt, der ein die Notwendigkeit einer Reinigung des Rasierapparats anzeigendes Signal abgeben kann, sowie eine Reinigungsvorrichtung für einen Rasierapparat, die gleichzeitig auch als Halterung für den Rasierapparat dient. Ist der Rasierapparat in die Reinigungsvorrichtung eingelegt, kann der Controller über den Netzkontakt des Rasierapparats mit der Reinigungsvorrichtung so verbunden sein, daß eine Signalübertragung zwischen dem Rasierapparat und der Reinigungsvorrichtung möglich ist. Damit die Reinigungsvorrichtung nicht unnötigerweise bei jedem Ablegen des Rasierapparats einen Reinigungsvorgang durchführt, wird diese nur dann aktiviert, wenn der Controller ein entsprechendes Signal der Reinigungsvorrichtung zuführt. Daher kann ein Rasierapparat ohne einen ein Reinigungssignal abgebenden Controller in diesem Reinigungsgerät nicht gereinigt werden.

Es ist daher Aufgabe der vorliegenden Erfindung, ein Zusatzgerät für ein Elektrokleingerät anzugeben, das mit verschiedenen Typen von Elektrokleingeräten zusammenwirken kann. Zusätzlich ist es Aufgabe der Erfindung, ein Verfahren zur Unterscheidung der verschiedenen Typen von Elektrokleingeräten anzugeben.

Zur Lösung dieser Aufgabe weist ein erfindungsgemäßes Zusatzgerät, beispielsweise ein Lade-, Reinigungs- und/oder Diagnosegerät, mindestens einen Anschluß auf, über den es mit dem Elektrokleingerät, beispielsweise einem elektrischen Haarschneide- oder -entfernungsgerät, insbesondere einem elektrischen Rasierapparat oder einer elektrischen Zahnbürste, elektrisch und/oder magnetisch verbindbar ist. Mit der Erkennungseinrichtung kann das Zusatzgerät automatisch erkennen, ob es mit einem Elektrokleingerät verbunden ist, sodaß es nicht erforderlich ist, daß das Elektrokleingerät ein Signal abgibt oder ein Benutzer einen Schalter oder eine sonstige Betätigungsvorrichtung bedient. Auf diese Weise erhöht sich der Bedienungskomfort und wird auch eine Fehlbedienung ausgeschlossen. Außerdem kann die sonst erforderliche Betätigungsvorrichtung am Gerät weggelassen werden, wodurch sich auch ein nennenswerter Kostenvorteil ergibt.

Eine besonders einfache Erkennungseinrichtung überwacht eine am Anschluß des Zusatzgeräts herrschende elektrische und/oder magnetische Größe. Beispielsweise wird sich bei einem elektrischen Anschluß mit mindestens zwei Anschlußklemmen der elektrische Widerstand oder die Spannung zwischen den Klemmen ändern, wenn die Geräte miteinander verbunden oder voneinander getrennt werden. Entsprechendes gilt auch bei einem magnetischen oder elektromagnetischen Anschluß. Ändert sich beispielsweise ausgehend von dem Zustand, in dem kein Elektrokleingerät mit dem Zusatzgerät verbunden ist, die elektrische und/oder magnetische Größe über ein bestimmtes Mindestmaß hinaus, so liefert die Erkennungseinrichtung ein entsprechendes Signal, das die Verbindung der Geräte signalisiert. Vorzugsweise wertet die Erkennungseinrichtung jedoch nicht die Änderung der elektrischen und/oder magnetischen Größe aus, sondern enthält einen Komparator, der den Betrag der elektrischen und/oder magnetischen Größe mit mindestens einem Referenzwert vergleicht. Liegt beispielsweise der Betrag der am Anschluß herrschenden elektrischen und /oder magnetischen Größe unter dem Referenzwert, so ist ein Elektrokleingerät mit dem Zusatzgerät verbunden und umgekehrt.

Gemäß einer bevorzugten Weiterbildung der Erfindung, ist mit der Erkennungseinrichtung auch der Typ des gerade mit dem Zusatzgerät verbundenen Elektrokleingeräts feststellbar. Daher ist ein erfindungsgemäßes Zusatzgerät über eine weitere Anschlußklemme mit dem Elektrokleingerät verbindbar, und weist beispielsweise einen Mikrocontroller auf, der über einen von ihm steuerbaren Schalter eine Signalquelle, insbesondere eine Spannungsquelle mit dieser Anschlußklemme verbindet: je nach dem, ob sich daraufhin die elektrische und/oder magnetische Größe zwischen den beiden anderen Anschlußklemmen ändert, ist entweder ein erster oder ein zweiter Gerätetyp mit dem Zusatzgerät verbunden.

Wenn es sich beispielsweise beim Zusatzgerät um ein Reinigungs- und Ladegerät für Rasierapparate handelt, das nach dem aus der DE 44 02 236 A1 bekannten Reinigungsprogramm arbeitet, bei dem der Rasierapparat während der Reinigung vom Zusatzgerät einund ausgeschaltet wird, um eine optimale Reinigungswirkung zu erzielen, so muß das Reinigungs- und Ladegerät beispielsweise erkennen können, ob der angeschlossene Rasierapparat einen Akkumulator enthält oder nicht. Bei einem Rasierer mit eingebautem Akkumulator, dessen Motor nur aus dem Akkumulator Strom entnehmen kann, muß nämlich der Akkumulator gegebenfalls erst noch aufgeladen werden, bevor das Reinigungsprogramm ablaufen kann. Rasierer ohne Akkumulator werden dagegen während der Reinigung direkt vom Reinigungsgerät aus mit Strom versorgt.

Bei einer anderen Ausführung weist das Zusatzgerät mehrere Komparatoren auf, die die an den beiden Anschlußklemmen des Zusatzgeräts herrschende elektrische und/oder magnetische Größe mit mehreren Referenzwerten vergleichen. Je nach dem zwischen welchen Referenzwerten der Betrag der elektrischen und/oder magnetischen Größe liegt, ist entweder ein bestimmter Typ eines Elektrokleingeräts oder gar kein Elektrokleingerät mit dem Zusatzgerät verbunden.

Die Erfindung wird nachstehend anhand eines Reinigungsgeräts und eines elektrischen Rasierapparats als Ausführungsbeispiel für ein Zusatzgerät und ein Elektrokleingerät erläutert, die in den Zeichnungen dargestellt sind. Weitere Ausgestaltungen sind in der Beschreibung beschrieben. Es zeigen:
- Fig. 1: eine Prinzipdarstellung einer Erkennungsschaltung für ein erfindungsgemäßes Reinigungsgerät und einen elektrischen Rasierapparat;
- Fig. 2: ein vereinfachtes Schaltbild eines erfindungsgemäßen Reinigungsgeräts und eines elektrischen Rasierapparats, der einen Akkumulator enthält;
- Fig. 3: das vereinfachte Schaltbild des erfindungsgemäßen Reinigungsgeräts gemäß Fig. 2 und eines Rasierapparats, der keinen Akkumulator enthält;
- Fig. 4: das vereinfachte Schaltbild gemäß Fig. 2, jedoch mit einem Rasierapparat dessen Akkumulator vom erfindungsgemäßen Reinigungsgerät aufgeladen werden kann.

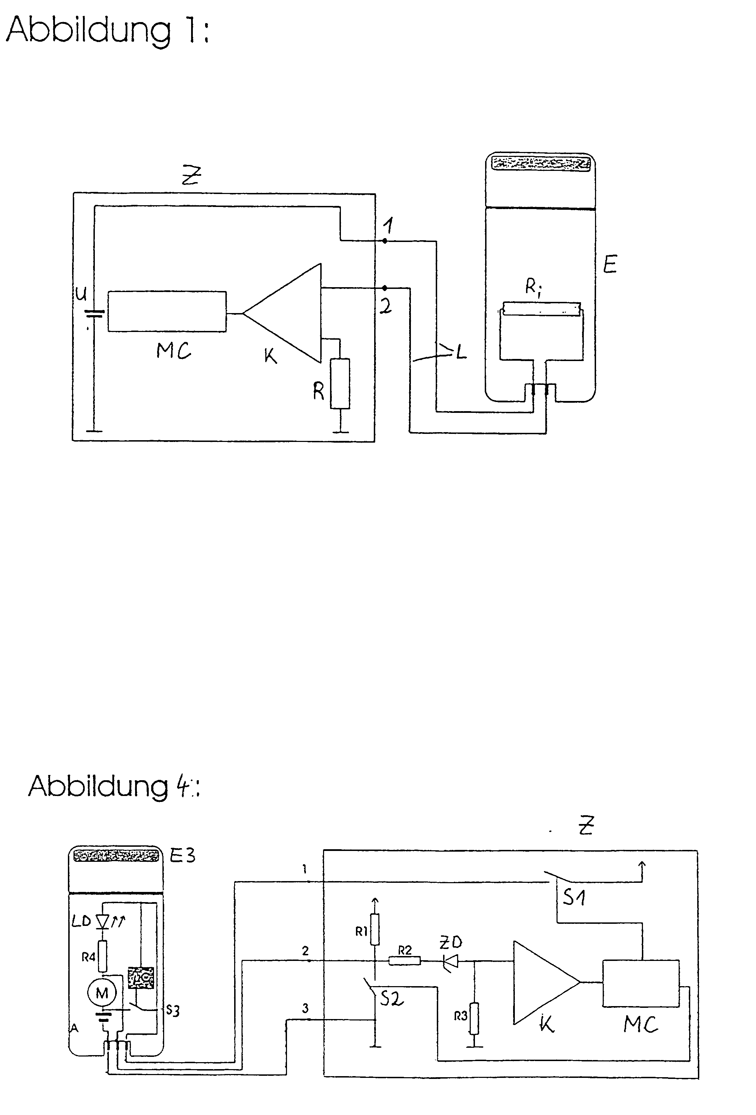

Ein erfindungsgemäßes Zusatzgerät Z enthält gemäß Fig. 1 eine Spannungsquelle U, die mit einer ersten Anschlußklemme 1 des Zusatzgeräts Z verbunden ist. Das Zusatzgerät Z enthält ferner einen Mikrocontroller MC, der mit dem Ausgang eines Komparators K verbunden ist. An einem Eingang des Komparators K liegt eine Referenzspannung an, die durch einen Widerstand R erzeugt wird, wogegen der andere Eingang mit einer zweiten Anschlußklemme 2 des Zusatzgeräts Z verbunden ist. Ein Elektrokleingerät E weist ebenfalls zwei Anschlußklemmen auf, die über eine elektrische Leitung L mit den beiden Anschlußklemmen 1, 2 des Zusatzgeräts Z verbunden sind. Das Elektrokleingerät E besitzt einen Innenwiderstand, der in Fig. 1 schematisch durch einen zwischen die Anschlußklemmen des Elektrokleingeräts E geschalteten Widerstand Rᵢ dargestellt ist.

Das Zusatzgerät Z mißt bei diesem Ausführungsbeispiel ständig den Widerstand an seinen Anschlußklemmen 1, 2, der praktisch unendlich groß ist, wenn kein Elektrokleingerät E angeschlossen ist. Ist jedoch ein Elektrokleingerät E mit den Anschlußklemmen 1, 2 des Zusatzgeräts Z verbunden, fließt aufgrund der von der Spannungsquelle U gelieferten Spannung ein Strom durch den Innenwiderstand des Elektrokleingeräts E, sodaß sich an der zweiten Anschlußklemme 2 des Zusatzgeräts Z eine entsprechende Spannung einstellt, die vom Komparator K mit der Referenzspannung verglichen wird. Ist der Innenwiderstand des Elektrokleingeräts E klein genug, wechselt der Ausgang des Komparators von "low" auf "high" oder umgekehrt. Dadurch kann der Mikrocontroller MC erkennen, daß das Zusatzgerät Z mit einem Elektrokleingerät E verbunden ist.

Bei anderen Ausführungen erfindungsgemäßer Geräte sind mehr als zwei elektrische Anschlußklemmen vorhanden, von denen beispielsweise zwei für die Stromversorgung des Elektrokleingeräts und eine dritte speziell für die Erkennung der Verbindung und/oder des Typs vorgesehen ist. Dazu ist die dritte Anschlußklemme beispielsweise mit einem sogenannten pull-up oder pull-down Widerstand beschaltet, der je nach Typ des Elektrokleingeräts unterschiedlich groß ist. Das Zusatzgerät kann dann anhand des gemessenen Widerstands bzw. der an der dritten Anschlußklemme herrschenden Spannung den Typ des Elektrokleingeräts erkennen. Auch kann statt einer elektrischen Verbindung eine induktive Kopplung zwischen beispielsweise einem Ladegerät und einem Elektrokleingerät vorgesehen sein.

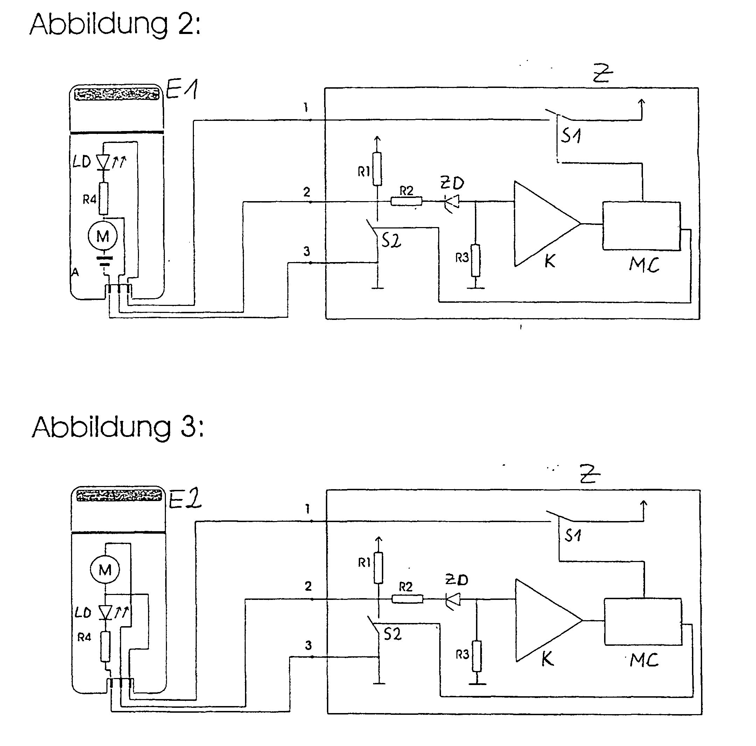

Das in den Figuren 2, 3 und 4 vereinfacht dargestellte Zusatzgerät Z weist drei Anschlußklemmen auf. Die erste Anschlußklemme 1 ist über einen ersten Schalter S1 mit einer durch einen Pfeil symbolisierten Spannungsquelle verbunden, an die ferner das eine Ende eines ersten Widerstands R1 angeschlossen ist. Das andere Ende des ersten Widerstands R1 ist mit der zweiten Anschlußklemme 2 verbunden. Zwischen der zweiten und dritten Anschlußklemme befindet sich ein zweiter Schalter S2. Beide Schalter S1, S2 sind durch einen Mikrocontroller MC steuerbar. Die dritte Anschlußklemme 3 ist mit Masse verbunden. Die zweite Anschlußklemme 2 ist außerdem mit dem einen Ende eines zweiten Widerstands R2 verbunden. Das andere Ende des zweiten Widerstands R2 ist mit der. Kathode einer Zenerdiode ZD verbunden. Die Anode der Zenerdiode ZD ist mit einem ersten Eingang eines Komparators K und dem einen Ende eines dritten Widerstands R3 verbunden. Das andere Ende des dritten Widerstands R3 ist mit Masse verbunden. Der Ausgang des Komparators K ist mit dem Mikrocontroller MC verbunden. Ein zweiter in den Figuren 2, 3 und 4 nicht dargestellter Eingang des Komparators K ist mit einer ebenfalls nicht dargestellten Referenzspannungsquelle verbunden.

In Fig. 2 ist ferner als Ausführungsbeispiel für ein Elektrokleingerät ein elektrischer Rasierapparat E1 dargestellt, der einen Akkumulator A enthält, wogegen in Fig. 3 ein elektrischer Rasierapparat E2 dargestellt ist, der keinen Akkumulator enthält. Beide Rasierapparate besitzen je drei Anschlußklemmen, die mit den entsprechenden Anschlußklemmen 1, 2, 3 des Zusatzgeräts Z elektrisch verbunden sind. Außerdem enthalten beide Rasierapparate einen Motor M und eine Reihenschaltung aus einem vierten Widerstand R4 und einer Leuchtdiode LD. Bei dem in Fig. 2 dargestellten Rasierapparat E1 liegt eine Reihenschaltung aus dem Akkumulator A und dem Motor M zwischen der zweiten und dritten Anschlußklemme und die Reihenschaltung aus dem vierten Widerstand R4 und der Leuchtdiode LD zwischen der ersten und zweiten Anschlußklemme. Bei dem in Fig. 3 dargestellten Rasierapparat E2 liegt der Motor M zwischen der ersten und zweiten Anschlußklemme und die Reihenschaltung aus dem vierten Widerstand R4 und der Leuchtdiode LD zwischen der ersten und dritten Anschlußklemme.

Nachfolgend wird anhand der Figuren 2 und 3 ein erfindungsgemäßes Verfahren beschrieben, mit dem das Reinigungsgerät erkennen kann, ob ein Rasierapparat mit den Anschlußklemmen verbunden ist, und um welchen Typ es sich handelt. Die zur Durchführung dieses Verfahrens nötigen Schritte werden vom Mikrocontroller MC gesteuert.

In einer Ausgangsstellung, in der das Reinigungsgerät nicht mit einem Rasierapparat verbunden ist, sind die beiden Schalter S1, S2 nicht geschlossen. Dann ist die Zenerdiode ZD leitend, und es liegt am ersten Eingang des Komparators K eine Spannung an, die durch die Spannung der Spannungsquelle und die Widerstände des ersten, zweiten und dritten Widerstands R1, R2, R3 bestimmt ist. Die genannten Widerstände und die Spannung der Referenzspannungsquelle sind so dimensioniert, daß der Ausgang des Komparators K "high" ist. Wird jetzt ein Rasierapparat mit dem Reinigungsgerät verbunden, liegt an der zweiten Anschlußklemme 2 nur noch eine niedrigere Spannung an, die im Falle eines Rasierers mit Akkumulator A ungefähr der Akkumulatorspannung entspricht, und im Fall eines Rasierers ohne Akkumulator durch die Widerstände der Leuchtdiode LD und des ersten und vierten Widerstands R1, R4 bestimmt ist. Daher sperrt die Zenerdiode ZD, und der dritte Widerstand R3 verbindet den ersten Eingang des Komparators K mit Masse, woraufhin der Ausgang des Komparators K "low" wird. Der Mikrocontroller MC kann am "low"-Potential erkennen, daß ein Rasierer mit dem Reinigungsgerät verbunden ist.

Um anschließend den Typ des angeschlossenen Rasierers festzustellen, wird der erste Schalter S1 vom Mikrocontroller MC kurzzeitig geschlossen. Bei einem Rasierer mit Akkumulator A ändert sich dadurch die Spannung an der zweiten Anschlußklemme 2 nicht, sondern ist weiterhin von der Spannung des Akkumulators A bestimmt. Daher bleibt auch der Ausgang des Komparators K auf "low". Bei einem Rasierer ohne Akkumulator wird dadurch jedoch dem ersten Widerstand R1 der Motor M des Rasierers parallelgeschaltet, sodaß die Spannung an der zweiten Anschlußklemme 2 kurzzeitig so groß wird, daß die Zenerdiode ZD kurzzeitig leitend wird, und der Ausgang des Komparators K kurzzeitig "high" wird. Geht also beim kurzzeitigen Schließen des ersten Schalters S1 der Ausgang des Komparators K ebenfalls kurzzeitig auf "high", so erkennt daran der Mikrocontroller MC, daß ein Rasierer ohne Akkumulator angeschlossen ist. Bleibt der Ausgang des Komparators K jedoch auf "low", so ist ein Rasierer mit Akkumulator A angeschlossen.

Soll während des Ablaufs eines Reinigungsvorgangs der Motor M des Rasierers eingeschaltet werden, so wird durch den Mikrocontroller MC der zweite Schalter S2 geschlossen. Bei einem angeschlossenen Rasierer mit Akkumulator A wird dadurch der Motor M durch den Akkumulator A mit Strom versorgt. Ist jedoch ein Rasierer ohne Akkumulator angeschlossen, wird dadurch der Motor M vom Reinigungsgerät mit Strom versorgt.

Bei einer in Fig. 4 dargestellten bevorzugten Ausführung weisen das Zusatzgerät und das Elektrokleingerät eine Einrichtung zur Datenübertragung auf, wie sie beispielsweise in der eingangs genannten DE 198 17 273 beschrieben ist. Die Datenübertragung erfolgt über die erste Anschlußklemme 1. Als Ausführungsbeispiel für ein Elektrokleingerät ist in Fig. 4 ein Rasierapparat E3 dargestellt, der einen Akkumulator A und einen Mikrocontroller C enthält, der für die Datenübertragung erforderlich ist. Der Rasierer weist ferner einen dritten Schalter S3 auf, der durch den Mikrocontroller C steuerbar ist. Zur Aufladung des Akkumulators A schließt der Mikrocontroller C des Rasierers E3 den dritten Schalter S3 und der Mikrocontroller MC des Zusatzgeräts Z den ersten Schalter S1, wodurch eine in Fig. 4 nicht dargestellte Ladeschaltung im Rasierer über die erste Anschlußklemme 1 mit der Spannungsquelle des Zusatzgeräts verbunden wird. Das Zusatzgerät dient somit auch als Ladegerät für den im Rasierer vorhandenen Akkumulator A.

Die Datenübertragung erfolgt erfindungsgemäß in der Weise, daß das Zusatzgerät dem Elektrokleingerät einen elektrischen Strom, eine elektrische Spannung oder ein elektrisches und/oder magnetisches Feld zuführt, der/die/das je nach gewünschter Richtung der Datenübertragung vom Elektrokleingerät oder vom Zusatzgerät mit einem entsprechenden Datensignal moduliert wird. Im jeweiligen empfangenden Gerät erfolgt eine Demodulation. Bei einem besonders einfach realisierbaren Verfahren erfolgt die Modulation durch Ein/Aus-Schalten des Stroms bzw. der Spannung oder des Feldes.

Soll bei den in Fig. 4 dargestellten Geräten eine Datenübertragung vom Zusatzgerät Z zum Elektrokleingerät E3 erfolgen, erzeugt der Mikrokontroller MC im Zusatzgerät ein Datensignal, mit dem er den ersten Schalter S1 ansteuert, wodurch dieser entsprechend geöffnet und geschlossen wird, sodaß die an der ersten Anschlußklemme 1 anliegende Spannung durch Ein/Aus-Schalten amplitudenmoduliert wird. Gleichzeitig stellt der Mikrocontroller C des Elektrokleingeräts E3 mit Hilfe eines Sensors, beispielsweise eines Komparators, fest, daß die Spannung moduliert ist, und demoduliert die empfangenen Daten. Eine Datenübertragung in umgekehrter Richtung, d.h. vom Elektrokleingerät ans Zusatzgerät, kann in entsprechender Weise erfolgen. Somit können die Geräte durch Übertragung entsprechender Steuersignale die für das Aufladen des Akkumulators A erforderliche Stellung der Schalter herbeiführen. Ist der Akkumulator ausreichend geladen, kann der Rasierer ein entsprechendes Datensignal ans Zusatzgerät übertragen, wodurch der erste Schalter S1 geöffnet und das Aufladen beendet wird.

## Patentansprüche

1. Zusatzgerät (Z) für ein Elektrokleingerät (E), beispielsweise elektrisches Haarschneideoder -entfemungsgerät, insbesondere elektrischer Rasierapparat oder elektrische Zahnbürste, mit mindestens einem Anschluß, über den es mit dem Elektrokleingerät (E) elektrisch und/oder magnetisch verbindbar ist, und mit einer Erkennungseinrichtung zum Erkennen, ob das Zusatzgerät (Z) mit dem Elektrokleingerät (E) elektrisch und/oder magnetisch verbunden ist, **dadurch gekennzeichnet,**
**daß** das Zusatzgerät (Z) ein Reinigungs- und Ladegerät oder ein Diagnose- und Ladegerät ist, und daß die Erkennungseinrichtung ferner eine Einrichtung zum Unterscheiden zwischen einem Elektrokleingerät (E) mit Akkumulator und einem Elektrokleingerät (E) ohne Akkumulator aufweist.

2. Zusatzgerät nach Anspruch 1, **dadurch gekennzeichnet,**
**daß** die Erkennungseinrichtung eine am Anschluß herrschende elektrische und/oder magnetische Größe überwacht.

3. Zusatzgerät nach Anspruch 1 oder 2, **dadurch gekennzeichnet,**
**daß** die Erkennungseinrichtung mindestens einen Komparator (K) aufweist, der die zwischen zwei Anschlußklemmen (2, 3) herrschende elektrische und/oder magnetische Größe mit mindestens einem Referenzwert vergleicht.

4. Zusatzgerät nach Anspruch 3, **dadurch gekennzeichnet,**
**daß** ein Mikrocontroller (MC) mit dem Ausgang des Komparators (K) verbunden ist.

5. Zusatzgerät nach einem der vorhergehenden Ansprüche, **dadurch gekennzeichnet,**
**daß** die Unterscheidungseinrichtung einen ersten von einem Mikrocontroller (MC) steuerbaren Schalter (S1) aufweist, der einerseits mit einer weiteren Anschlußklemme (1) und andererseits mit einer Signalquelle (U) verbunden ist.

6. Zusatzgerät nach einem der vorhergehenden Ansprüche, **dadurch gekennzeichnet,**
**daß** es einen zweiten vom Mikrocontroller (MC) steuerbaren Schalter (S2) aufweist, durch den das Elektrokleingerät ein- und ausschaltbar ist.

7. Verfahren zur Erkennung einer elektrischen und/oder magnetischen Verbindung zwischen einem Zusatzgerät (Z) und einem Elektrokleingerät (E), die über einen elektrischen und/oder magnetischen Anschluß miteinander verbindbar sind, bei dem eine am Anschluß herrschende elektrische und/oder magnetische Größe überwacht wird,
**dadurch gekennzeichnet,**
**daß** dann, wenn erkannt wurde, daß die Geräte (Z; E) miteinander verbunden sind, vom Zusatzgerät (Z) über eine erste Anschlußklemme (1) ein Signal ans Elektrokleingerät (E) übertragen und gleichzeitig überwacht wird, ob sich dabei die an einer zweiten Anschlußklemme (2) oder die zwischen zwei Anschlußklemmen (2, 3) herrschende elektrische und/oder magnetische Größe ändert oder nicht, und dadurch bestimmt wird, ob mit dem Zusatzgerät (Z) ein Elektrokleingerät (E) mit oder ohne Akkumulator verbunden ist.

8. Verfahren nach Anspruch 7, **dadurch gekennzeichnet,**
**daß** die zwischen zwei Anschlußklemmen (2, 3) herrschende Spannung oder Impedanz mit einem Referenzwert verglichen wird, wobei das Vergleichsergebnis angibt, ob die Geräte miteinander verbunden sind oder nicht.

9. Verfahren nach Anspruch 7, **dadurch gekennzeichnet,**
**daß** die zwischen zwei Anschlußklemmen (2, 3) des Zusatzgeräts herrschende elektrische und/oder magnetische Größe mit mehreren Referenzwerten verglichen wird, wobei das Vergleichsergebnis angibt, welcher Typ eines Elektrokleingeräts oder ob gar kein Elektrokleingerät mit dem Zusatzgerät verbunden ist.

10. Verfahren nach einem der Ansprüche 7 bis 9, **dadurch gekennzeichnet,**
**daß** das Zusatzgerät (Z) dem Elektrokleingerät (E3) einen elektrischen Strom, eine elektrische Spannung oder ein elektrisches und/oder magnetisches Feld zuführt, der/die/das zwecks Datenübertragung vom Elektrokleingerät oder vom Zusatzgerät moduliert wird.

11. Verfahren nach Anspruch 10, **dadurch gekennzeichnet,**
**daß** die Modulation durch Ein/Aus-Schalten des Stroms, der Spannung oder des Feldes erfolgt.

## Claims

1. A supplementary device (Z) for a small electric device (E) as, for example, an electric hair cutting or hair removal apparatus, particularly an electric shaving apparatus, or an electric toothbrush, with at least one connection via which it is electrically and/or magnetically connectable to the small electric device (E), and with an arrangement for detecting whether the supplementary device (Z) is electrically and/or magnetically connected to the small electric device (E),
**characterized in that** said supplementary device (Z) is a cleaning and charging device or a diagnosis and charging device, and that said detection arrangement further includes an arrangement for discriminating between a small electric device (E) equipped with a storage battery and a small electric device (E) having no storage battery.

2. The supplementary device as claimed in claim 1,
**characterized in that** the detection arrangement monitors an electric and/or magnetic quantity prevailing at the connection.

3. The supplementary device as claimed in claim 1 or 2,
**characterized in that** the detection arrangement includes at least one comparator (K) which compares the electric and/or magnetic quantity prevailing across two terminals (2, 3) with at least one reference value.

4. The supplementary device as claimed in claim 3,
**characterized in that** a microcontroller (MC) is connected to the output of the comparator (K).

5. The supplementary device as claimed in any one of the preceding claims,
**characterized in that** the discriminating arrangement includes a first switch (S1) which is controllable by a microcontroller (MC) and has its one end connected to a further terminal (1) and its other end to a signal source (U).

6. The supplementary device as claimed in any one of the preceding claims,
**characterized in that** it includes a second switch (S2) which is controllable by the microcontroller (MC) and operable to turn the small electric device on and off.

7. A method of detecting the presence of an electric and/or magnetic connection between a supplementary device (Z) and a small electric device (E) connectable to each other via an electric and/or magnetic connection, wherein an electric and/or magnetic quantity prevailing at the connection is monitored,
**characterized in that,** when it is detected that the devices (Z; E) are connected to each other, the supplementary device (Z) temporarily transmits, via a first terminal (1), a signal to the small electric device (E) while at the same time it is monitored whether or not the electric and/or magnetic quantity prevailing on a second terminal (2) or across the two terminals (2, 3) varies, whereby it is established whether a small electric appliance (E) with or without storage battery is connected to the supplementary device (Z).

8. The method as claimed in claim 7,
**characterized in that** the voltage or impedance prevailing across two terminals (2, 3) is compared with a reference value, the comparison result being indicative of whether or not the devices are connected to each other.

9. The method as claimed in claim 7,
**characterized in that** the electric and/or magnetic quantity prevailing across two terminals (2, 3) of the supplementary device is compared with several reference values, the comparison result being indicative of the type of small electric device connected to the supplementary device or of the absence of a small electric device.

10. The method as claimed in any one of the claims 7 to 9,
**characterized in that** the supplementary device (Z) feeds an electric current, an electric voltage or an electric and/or magnetic field to the small electric device (E3), which current/voltage/field is modulated by the small electric device or by the supplementary device for purposes of data transmission.

11. The method as claimed in claim 10,
**characterized in that** the modulation is performed by switching said electric current, said voltage or said field on and off.

## Revendications

1. Accessoire (Z) pour un petit appareil électrique (E), par exemple une tondeuse ou un épilateur électriques, notamment un rasoir électrique ou une brosse à dents électrique, avec au moins un branchement, par l'intermédiaire duquel il peut être connecté par voie électrique et/ou magnétique avec le petit appareil électrique (E) et avec un système de détection pour détecter si l'accessoire (Z) est connecté sur le petit appareil électrique (E), par voie électrique et/ou magnétique, **caractérisé en ce que** l'accessoire (Z) est un dispositif de nettoyage et un chargeur ou un dispositif de diagnostic et un chargeur et **en ce que** le système de détection est doté par ailleurs d'un système pour distinguer un petit appareil électrique (E) avec accumulateur d'un petit appareil électrique sans accumulateur.

2. Accessoire selon la revendication 1, **caractérisé en ce que** le système de détection surveille une dimension électrique et/ou magnétique qui règne au branchement.

3. Accessoire selon l'une quelconque des revendications 1 ou 2, **caractérisé en ce que** le système de détection est doté d'au moins un comparateur (K) qui compare la dimension électrique et/ou magnétique qui règne entre deux bornes de raccordement (2, 3) avec au moins une valeur de référence.

4. Accessoire selon la revendication 3, **caractérisé en ce qu'**un microcontrôleur (MC) est relié à la sortie du comparateur (K).

5. Accessoire selon l'une quelconque des revendications précédentes, **caractérisé en ce que** le système de distinction est doté d'un premier commutateur (S1) pilotable par un microcontrôleur (MC), qui est relié d'une part avec une autre borne de raccordement (1) et d'autre part avec une source signalétique (U).

6. Accessoire selon l'une quelconque des revendications précédentes, **caractérisé en ce qu'**il est doté d'un second commutateur (S2) pilotable par le microcontrôleur (MC), par l'intermédiaire duquel le petit appareil électrique peut être connecté et déconnecté.

7. Procédé de détection d'une connexion électrique et/ou magnétique entre un accessoire (Z) et un petit appareil électrique (E), qui peuvent être connectés entre eux par l'intermédiaire d'un branchement électrique et/ou magnétique, dans lequel une dimension électrique et/ou magnétique régnant au branchement est surveillée, **caractérisé en ce que** lorsqu'il a été détecté que les appareils (Z ; E) sont connectés entre eux, l'accessoire (Z) transmet un signal au petit appareil électrique (E), par l'intermédiaire d'une première borne de raccordement (1) et l'on assiste à une surveillance simultanée pour déterminer si à cet effet, une dimension électrique et/ou magnétique régnant à une seconde borne de raccordement (2) ou entre deux bornes de raccordement (2, 3) se modifie ou non et il est déterminé si un petit appareil électrique (E) muni ou non d'un accumulateur est connecté sur l'accessoire (Z).

8. Procédé selon la revendication 7, **caractérisé en ce que** la tension ou l'impédance régnant entre deux bornes de raccordement (2, 3) est comparée à une valeur de référence, le résultat de la comparaison indiquant si les deux appareils sont connectés l'un à l'autre ou non.

9. Procédé selon la revendication 7, **caractérisé en ce que** la dimension électrique et/ou magnétique régnant entre deux bornes de raccordement (2, 3) de l'accessoire est comparée à plusieurs valeurs de référence, le résultat de la comparaison indiquant quel type de petit appareil électrique ou si aucun appareil électrique n'est connecté avec l'accessoire.

10. Procédé selon l'une quelconque des revendications 7 à 9, **caractérisé en ce que** l'accessoire (Z) amène au petit appareil électrique (E3) un courant électrique, une tension électrique ou un champ électrique et/ou magnétique, qui est (sont) modulé(es) par le petit appareil électrique ou par l'accessoire à des fins de transfert de données.

11. Procédé selon la revendication 10, **caractérisé en ce que** la modulation a lieu par un connexion/déconnexion du courant, de la tension ou du champ.
